Europäisches Patentamt

European Patent Office

Office européen des brevets

(11) Publication number: **0 315 609 B1**

# (12) EUROPEAN PATENT SPECIFICATION

(45) Date of publication of patent specification :
**17.07.91 Bulletin 91/29**

(51) Int. Cl.⁵ : **F16H 1/32**

(21) Application number : **88850285.3**

(22) Date of filing : **29.08.88**

(54) Gear mechanism.

(30) Priority : **06.11.87 SE 8704339**

(43) Date of publication of application :
**10.05.89 Bulletin 89/19**

(45) Publication of the grant of the patent :
**17.07.91 Bulletin 91/29**

(84) Designated Contracting States :
**DE FR GB IT**

(56) References cited :
**DE-A- 2 635 088
FR-A- 771 841
FR-A- 2 592 121
GB-A- 1 340 018**

(73) Proprietor : **SKF Nova AB
S-415 50 Göteborg (SE)**

(72) Inventor : **Adolfsson, Rune
Skyttegatan 4
S-50243 Boras (SE)**

(74) Representative : **Forsberg, Lars-Ake et al
AB SKF Patent Department
S-415 50 Göteborg (SE)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

The present invention refers to a gear mechanism incorporating a driving input shaft, an output shaft arranged coaxially thereto, a first gear rim arranged in a bearing housing and being coaxial relative to said shafts, a second gear rim provided on the output shaft and a unitary, one piece ring, having double gear rings integral with said ring and being eccentrically supported on the input shaft, one of which gear rings is partially in gear engagement with the first gear rim which faces inwards and the other gear ring of which is partially in gear engagement with the second gear rim which faces outwards.

## BACKGROUND OF THE INVENTION

Speed reducing gear wheel transmissions of the above mentioned type are earlier known in several different embodiments. Common to them all is that they require quite a large space and are comparatively expensive to manufacture.

In FR-A-2592121 there is shown another type of a gear mechanism. Instead of a unitary, one piece ring there is provided two gears which are rotatably on outer portions of a ring which is rotatably arranged on the input shaft.

## PURPOSE AND MOST ESSENTIAL FEATURES OF THE INVENION

The purpose of the invention is to provide a gear mechanism having a big gear ratio in a compact design and at a low price. This has been obtained in that the ring is constituted by the outer race ring of a rolling bearing, the inner race ring of which is eccentrically arranged upon the input shaft.

## DESCRIPTION OF THE DRAWING

The invention hereinafter will be further described wich reference to the accompanying drawings, which show some embodiments.

Fig. 1 shows a section through a gear mechanism according to the invention.
Fig. 2 shows a section along line II-II in Fig. 1.
Figs. 3 and 4 show sections through parts of modified gear mechanisms according to the invention.

## DESCRIPTION OF THE EMBODIMENTS

The gear mechanism according to the invention consists of a driving input shaft 11, e.g. shaped as a tubular shaft, and an output shaft 12 arranged coaxially in relation thereto, and which is preferably also a tubular shaft. The input driving shaft 11 may e.g. be the rotor shaft of an electric motor. Both shaft ends 11 and 12 are supported in one bearing 13 and 14 each in a bearing housing 15.

At the free end of the input shaft 11 there is provided excentrically to the longitudinal axis 16 of the input shaft 15, a further rolling bearing 17, the excentricity in relation to the longitudinal axis 16 is designated e. The outer race ring 18 of the rolling bearing 17 is designed as a transmission member, provided with two gear rings 19 and 20 arranged axially displaced relative to each other. One of the gear rings 19 is provided with outwardly projecting teeth and the other gear ring with inwardly projecting teeth. The gear ring 19 is partially in gear engagement with a first gear rim 21 provided coaxially to the shafts 11, 12, and being fixedly attached to the bearing housing 15 and having its teeth directed radially inwardly towards the gear ring 19. This has a sligthly lower number of teeth than the first gear rim 21, the ratio thereby being e.g. 98 to 100. At the outer free end of the output shaft 12 is designed or provided a second gear rim 22, coaxially to the output shaft 12, which second gear rim is also in partial gear engagement with the excentrically arranged gear ring 20 of the outer race ring 18.

At rotation of the shaft 11, the outer race ring of the rolling bearing 17 will rotate at a low speed relative to the shaft. This speed is transferred via the ring 18 and further via the introverted gear ring 20, which cooperates with the second gear rim 22 to the concentrically supported output shaft 12.

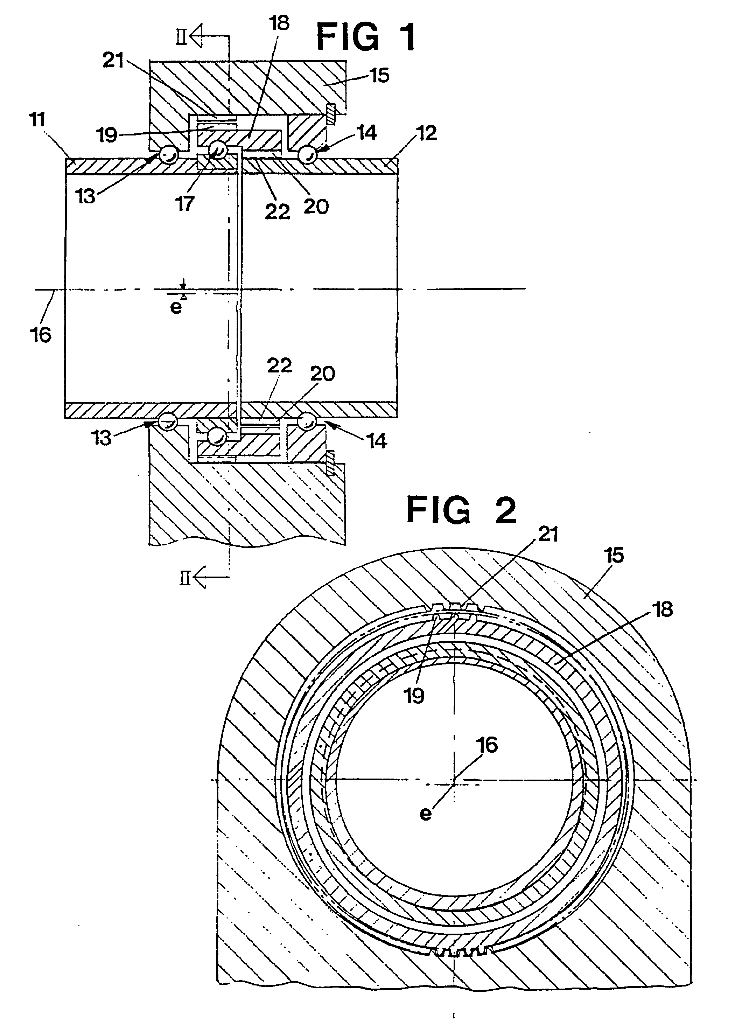

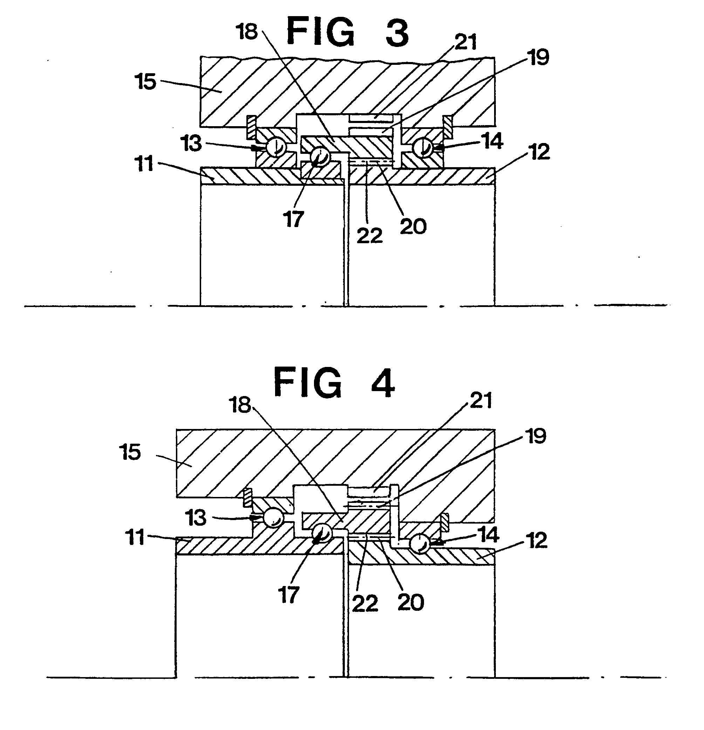

The embodiment according to Fig. 3 differs from the one shown in Fig. 1 therein that both gear rims of the outer race ring are displaced radially relative to each other contrary to the embodiment according to Fig. 1 and 2, wherein the gear rings are arranged to be axially displaced relative to each other.

In the embodiment according to Fig. 4 the simplification of the design has been driven still further, in that the input and output tubular shafts of the gear mechanism have been equipped with race tracks for the rolling bearings, whereby the tubular shafts also constitute the inner race rings for the rolling bearings.

## Claims

1. A gear mechanism incorporating a driving input shaft (11), an output shaft (12) arranged coaxially thereto, a first gear rim (21) arranged in a bearing housing (15) and being coaxial relative to said shafts, a second gear rim (22) provided on the output shaft (12), and a unitary, one piece ring (18) having double gear rings (19, 20) integral with said ring (18) and being eccentrically supported on the input shaft (11), one of which gear rings (19) is partially in gear engagement with the first gear rim (21) which faces inwards and the other gear ring (20) of which is partially in gear engagement with the second gear rim (12) which faces outwards, said input shaft (11) being rotatably journalled in the bearing housing (15) by means of a rolling bearing (17), the inner race ring of said rolling bearing being arranged eccentrically upon the input shaft (11),

**characterized in that**

said ring (18) spans the input and output shafts (11, 12) and forms the outer race ring of said rolling bearing (17), the inner race ring of said bearing (17) being arranged eccentrically on the input shaft (11), and the outer race ring of said bearing (17) being the sole transmission means between said input shaft (11) and said output shaft (12).

2. A gear mechanism according to claim 1, wherein the two gear rings (19, 20) of the outer race ring (18) are axially displaced relative to each other.

3. A gear mechanism according to claim 1, wherein the two gear rings (19, 20) of the outer race ring (18) are radially displaced relative to each other.

4. A gear mechanism according to claim 1, wherein the input shaft and/or the output shaft (11 and 12 resp.) are tubular shafts which is/are designed as inner race ring(s) for rolling bearing(s) arranged thereupon.

## Patentansprüche

1. Ein Getriebe beinhaltend eine Antriebswelle (11), eine koaxial zu dieser angeordnete Abtriebswelle (12), einen in einem Lagergehäuse (15) eingebauten und koaxial zu den besagten Wellen angeordneten ersten Zahnkranz (21), einen von der Abtriebswelle (12) getragenen zweiten Zahnkranz (22) und einen einheitlichen, einteiligen Ring (18), welcher zwei, mit dem besagten Ring (18) einstückig verbundene Zahnradringe (19, 20) aufweist und auf der Antriebswelle (11) exzentrisch getragen ist, wobei einer (19) der Zahnradringe mit dem nach innen weisenden ersten Zahnkranz (21) teilweise in Eingriff steht und der andere Zahnkranz (20) mit dem nach außen weisenden zweiten Zahnkranz (22) teilweise in Eingriff steht und die Antriebswelle (11) im Lagergehäuse (15) mittels eines Wälzlagers (17), dessen Lagerinnenring auf der Antriebswelle (11) exzentrisch angeordnet ist, drehbar gelagert ist, dadurch gekennzeichnet, daß der besagte Ring (18) die Antriebswelle (11) und Abtriebswelle (12) überspannt und einen Lageraußenring für das besagte Wälzlager (17) bildet, wobei der Lagerinnenring des besagten Lagers (17) auf der Antriebswelle (11) exzentrisch angeordnet ist und der Lageraußenring des besagten Lagers (17) das einzige Übertragungsmittel zwischen der besagten Antriebswelle (11) und der besagten Abtriebswelle (12) bildet.

2. Ein Getriebe nach Anspruch 1, bei dem die zwei Zahnradringe (19, 20) des Lageraußenringes (18) in axialer Richtung relativ zueinander versetzt angeordnet sind.

3. Ein Getriebe nach Anspruch 1, bei dem die zwei Zahnradringe (19, 20) des Lageraußenringes (18) in radialer Richtung relativ zueinander versetzt angeordnet sind.

4. Ein Getriebe nach Anspruch 1, bei dem die Antriebswelle und/oder die Abtriebswelle (11 und/bzw. 12) Hohlwellen sind, wobei die Hohlwelle(n) als Lagerinnenring(e) für ein bzw. mehrere auf dieser bzw. diesen angeordnete(s) Wälzlager ausgebildet ist (sind).

## Revendications

1. Mécanisme à engrenages comprenant un arbre d'entrée moteur (11), un arbre de sortie (12) coaxial à l'arbre d'entrée, une première couronne dentée (21) disposée dans un palier (15) pour roulements et coaxiale aux dits arbres, une seconde couronne dentée (22) prévue sur l'arbre de sortie (12) et une bague unitaire en une pièce (18) avec deux dentures (19, 20) solidaire de ladite bague (18), laquelle est montée excentriquement sur l'arbre d'entrée (11), l'une des dentures (19) engrenant partiellement avec la première couronne dentée (21) orientée vers l'intérieur et l'autre denture (20) engrenant partiellement avec la seconde couronne dentée (22) orientée vers l'extérieur, le tourillon du dit arbre d'entrée étant mobile en rotation dans le palier (15) au moyen d'un roulement (17) dont la bague intérieure est montée excentriquement sur l'arbre d'entrée (11) caractérisé en ce que

ladite bague (18) chevauche les arbres d'entrée et de sortie (11,12) et forme la bague extérieure du dit roulement (17), la bague intérieure du dit roulement (17) étant montée excentriquement sur l'arbre d'entrée (11) et la bague extérieure du dit roulement (17) étant le seul moyen de transmission entre ledit arbre d'entrée (11) et ledit arbre de sortie (12).

2. Mécanisme à engrenages selon revendication 1, dans lequel les deux dentures (19,20) de la bague extérieure (18) sont décalées axialement l'une par rapport à l'autre.

3. Mécanisme à engrenages selon revendication 1, dans lequel les deux dentures (19,20) de la bague extérieure (18) sont décalées radialement l'une par rapport à l'autre.

4. Mécanisme à engrenages selon revendication 1, dans lequel l'arbre d'entrée et/ou l'arbre de sortie (11 et 12 respectivement) sont arbres tubulaires constituant la bague intérieure/les bagues intérieures de roulements.

FIG 1

FIG 2

4

# FIG 3

# FIG 4